# EUROPEAN PATENT SPECIFICATION

(11) **EP 0 449 198 B1**
(45) Date of publication and mention of the grant of the patent: **23.07.1997**
(21) Application number: 91104749.6
(22) Date of filing: 26.03.1991
(51) Int. Cl.: H04N 3/22, H04N 3/30

(54) **Synchronized horizontal scanning at horizontal frequency multiples**
Synchronisierte horizontale Abtastung für das Vielfache der horizontalen Frequenz
Balayage horizontal synchronisé pour des multiples de la fréquence horizontale

(30) Priority: 26.03.1990 US 499249
(43) Date of publication of application: 02.10.1991
(73) Proprietor: THOMSON CONSUMER ELECTRONICS, INC., Indianapolis Indiana 46201 (US)
(72) Inventor: Fernsler, Ronald Eugene, Indianapolis, Indiana 46220 (US); Rodriguez-Cavazos, Enrique, Indianapolis, Indiana 46236 (US)
(74) Representative: Einsel, Robert, Dipl.-Ing.

(56) References cited:
- EP-A- 0 186 433
- US-A- 3 891 800
- US-A- 4 591 910

## Description

This invention relates generally to the field of horizontal deflection systems for television apparatus. More particularly, this invention relates to the generation of horizontal synchronizing signals useful in systems displaying video signals at higher than a basic or standard horizontal scanning rate.

Television apparatus require that the circuits generating the raster scan be synchronized with the video signal being displayed. Standard NTSC video signals, for example, are displayed by interlacing successive fields, each field being generated by a raster scanning operation at a basic or standard horizontal scanning rate of approximately 15,734 Hz.

The basic scanning rate for video signals is variously referred to as f_{H}, 1f_{H}, and 1H. The actual frequency of a 1f_{H} signal will vary according to different video standards. In accordance with efforts to improve the picture quality of television apparatus, systems have been developed for displaying video signals progressively, in a noninterlaced fashion. Progressive scanning requires that each displayed frame must be scanned in the same time period allotted for scanning one of the two fields of the interlaced format. Accordingly, the horizontal scanning frequency must be twice that of the interlaced video signals. The scanning rate for such progressively scanned displays is variously referred to as 2f_{H} and 2H. A 2f_{H} scanning frequency according to standards in the United States, for example, is approximately 31,468 Hz. A similar situation is presented when a video signal with a higher horizontal scanning frequency as broadcast or cablecast, for example 2f_{H}, is to be displayed at 4f_{H}, or at other multiple rates.

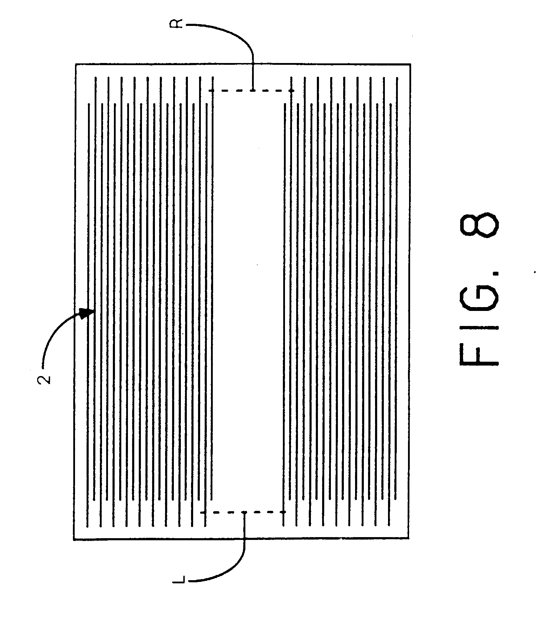

A problem that may be encountered in generating a second horizontal synchronizing signal, for example at 2f_{H}, from a first horizontal synchronizing signal, for example at 1f_{H}, in a video signal, is assuring sufficiently precise symmetry of the second synchronizing signal within the period of the first synchronizing signal. The period of the second signal may vary due to jitter of the edges of the pulses in the first signal. If the symmetry of a 2f_{H} synchronizing signal, for example, is not very precise within any 1f_{H} period, for example, the 2f_{H} trace will be initiated at a different instant every other line in the raster. This can cause a split raster effect, as shown for example in FIGURE 8. A raster 2 has a first set of alternate scan lines forming a picture portion R which diverges to the right and a second set of alternate scan lines forming a picture portion L which diverges to the left. Adjacent retrace pulses are of different amplitude because different peak to peak yoke currents flow during adjacent trace periods. Different peak to peak yoke currents flow during adjacent trace periods because adjacent trace periods are of different length. The amount of the scanning difference between adjacent lines will depend on the magnitude of the period difference and the overall energy recovery efficiency of the deflection circuit. The effect of raster splitting is exaggerated in FIGURE 8, wherein the scan lines of portion L begin sooner than the scan lines of portion R. However, time differences between adjacent trace periods on the order of only 100 nanoseconds may cause unacceptable amounts of raster splitting.

Phase locked loop systems are widely known and used in television apparatus. Indeed, dual phase locked loop systems have been developed for providing accurate 1f_{H} synchronizing signals. In such a configuration, a first phase locked loop is a conventional phase locked loop in which the output of a voltage controlled oscillator, or the output of a counter divided digital oscillator, is compared to, and subsequently locked to, the incoming horizontal synchronizing pulse stripped from the video signal which is to be processed and displayed on a cathode ray tube. The second phase locked loop, which also operates at a 1f_{H} rate, compares the same oscillator output of the first loop with a 1f_{H} rate pulse representative of the retrace voltage across the deflection yoke used to generate the 1f_{H} scanning current. The error voltage from the second phase comparison is used to generate a pulse width modulating signal which determines the initiation of the 1f_{H} output device turn on, and subsequently, retrace initiation, or the phase of each line within a vertical field. A one shot timing device can provide a constant mark/space ratio between the pulse width modulating output signal and the 1f_{H} output switching transistor.

The loop response of the first phase locked loop is usually relatively slow. Accordingly, the first phase locked loop normally has narrow bandwidth to optimize phase jitter reduction with decreased input RF signal strength as evident in fringe reception areas. The second phase locked loop generally has a faster loop response. Accordingly, the second phase locked loop has a wider bandwidth allowing the second phase locked loop to very closely track variations in the raster scanning current due to horizontal output transistor storage time variations and high voltage transformer tuning effects, resulting in a straight, nonbending raster under all beam current loading conditions. The only significant exception to this mode of operation is with respect to those compromises necessary in the first phase locked loop to accommodate signals from video cassette recorders and the like, in which step changes of up to 10 microseconds in phase are sometimes encountered. Tradeoffs in respective loop responses can be made to provide adequate weak signal performance without significant overall degradation of receiver performance.

An asymmetry in the first synchronizing signal, for example at 1f_{H}, can be introduced by the very nature of the phase locked loop used in the synchronization system, which requires that the first, or 1f_{H}, timing signal be used as a feedback signal to the phase comparator in the phase locked loop. The asymmetry has been corrected in the past, for example, by special signal processing circuits associated with operation of the first phase locked loop and/or the circuit used for converting the 1f_{H} timing signal to a 2f_{H} timing or synchronizing signal. These can be costly, and can result in unwanted delays in propagating synchronizing information through the deflection circuitry.

The document US - A - 3 891 800 discloses a horizontal deflection circuit in which two cascaded PLLs are provided for generating the line timing signal. The feedback signals for the PLLs can either be independent of each other or common to the two PLLs.

US - A - 4 591 910 discloses a horizontal deflection circuit comprising two cascaded PLLs with independent feedback signals. A variable delay is integrated in the second loop for centering the image.

It is an aspect of this invention to provide a horizontal deflection system having accurate synchronizing circuits for use in displaying video signals at a multiple scanning rate, where an asymmetry stems from a periodic perturbation of a synchronizing/timing signal. In accordance with this aspect of the invention, a first phase locked loop generates a first timing signal at a first horizontal synchronizing frequency corresponding to a horizontal synchronizing component in a video signal. A converter circuit derives, from the first timing signal, a second timing signal, having a second frequency at a integral multiple, greater than unity, of the first frequency and subject to a variation in frequency at a rate corresponding to the first frequency. A second phase locked loop receives the second timing signal and a signal produced by said second phase locked loop at said second frequency, and includes a voltage controlled oscillator for generating a smooth horizontal synchronizing signal at the second frequency. The second phase locked loop has a characteristic loop response time greater than the period of said rate of variation of the second timing signal. A horizontal output deflection stage may be coupled to the second phase locked loop for synchronized horizontal scanning in accordance with the second frequency. The two phase locked loops are configured in tandem, in conjunction with the signal rate converter, or multiplier. No additional signal processing circuitry is needed to correct the symmetry of the timing signal generated by the first phase locked loop or the symmetry of the multiple rate timing signal derived by the converter.

In an illustrative embodiment, the first phase locked loop operates at a first horizontal scanning frequency, for example 1f_{H}, and the second phase locked loop, including a voltage controlled oscillator, operates at a second horizontal scanning frequency which is a multiple of the first frequency, 2f_{H}. The first phase locked loop synchronizes a 1f_{H} voltage controlled oscillator output, or counter divided oscillator output, to the synchronizing signal of an incoming 1f_{H} video signal. The second phase locked loop synchronizes the raster scanning with a 2f_{H} video signal from a 2f_{H} speedup video processing system.

The symmetry of the second timing signal within the period of the first timing signal need not be exact. Rather, the second phase locked loop is characterized by a loop operation which averages the asymmetry errors due to deviations of the first timing signal from a fifty percent duty cycle. Therefore, the second phase locked loop automatically provides correction of asymmetry, and at the same time, locks the horizontal output deflection stage to the generated second synchronizing signal. The second synchronizing signal and the horizontal deflection circuit have the same frequency and a fixed phase relationship.

The response of the second phase locked loop is slow enough to reject any component of the first timing signal, but fast enough to track video cassette recorder type signals, as these types of signals will produce a response first from the first loop and secondly from the second loop. The second phase locked loop has a low pass filter which prevents the voltage controlled oscillator thereof from changing frequency as fast as the error signal changes due to the asymmetry of the uncorrected second timing signal. The error signal changes at the rate of the first timing signal. In a 1f_{H} to 2f_{H} system, for example, the 2f_{H} voltage controlled oscillator does not respond quickly to the frequency variation of the uncorrected 2f_{H} timing signal from the converter, which varies at the 1f_{H} rate. By the time the 2f_{H} voltage controlled oscillator increases frequency a little, for example, responsive to an error correction control signal, the error control signal tries to reduce the frequency. This has the effect of driving the error signal closer to an average value, which results in a smooth 2f_{H} rate. Raster bends are corrected by the fast nature of the second phase locked loop.

### In the Drawing:

FIGURE 1 is a block diagram of a horizontal deflection system in accordance with this invention, having synchronizing circuits for generating timing signals to display 1f_{H} video signals at a 2f_{H} horizontal scanning rate.

FIGURES 2(a), 2(b), 2(c), 2(d) and 2(e) are waveforms useful for explaining the asymmetry inherent in the circuit shown in FIGURE 1.

FIGURE 3 is a schematic of a 1f_{H} to 2f_{H} analog signal converter suitable for use in the synchronization system shown in FIGURE 1.

FIGURE 4 is a block diagram of a horizontal deflection system in accordance with this invention, having synchronizing circuits for generating timing signals to display a progressively scanned video output, and including a 1f_{H} to 2f_{H} digital signal converter.

FIGURES 5(a), 5(b), 5(c), 5(d), 5(e) and 5(f) are waveforms useful for explaining the asymmetry inherent in the digital circuit shown in FIGURE 4.

FIGURES 6(a), 6(b), 6(c) and 6(d) are waveforms useful for explaining the manual phase adjustment between 1f_{H} and 2f_{H} synchronizing signals for the circuit shown in FIGURES 4 and 7.

FIGURE 7 is a circuit diagram showing the second phase locked loop of FIGURE 4 in more detail.

FIGURE 8 is a diagram illustrating raster splitting due to asymmetry of a 2f_{H} synchronizing signal within the period of a 1f_{H} synchronizing signal.

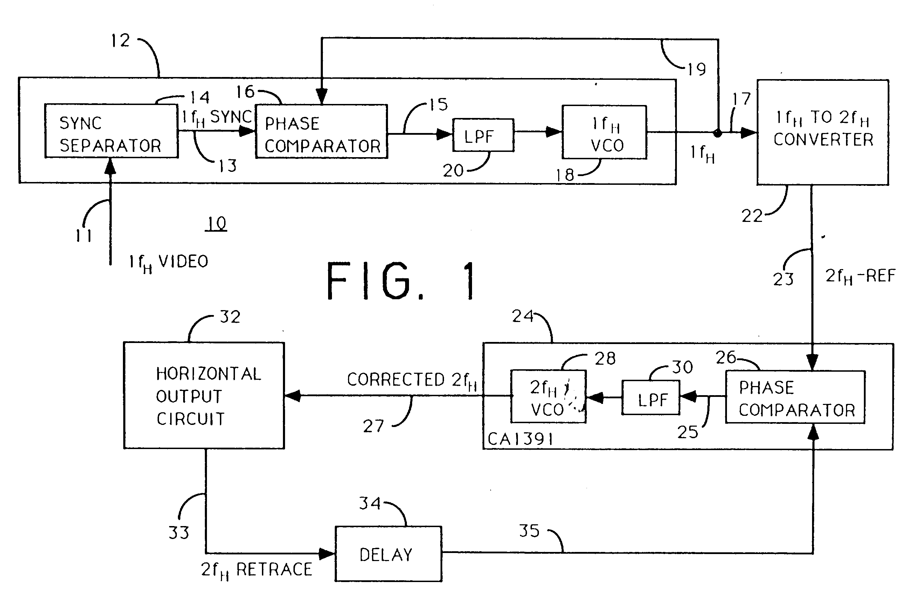

A synchronization system for displaying 1f_{H} video signals at a 2f_{H} scanning rate is shown in block diagram form in FIGURE 1, and generally designated by reference numeral 10. An analog circuit 12, for example, comprises a sync separator 14, a phase comparator 16 and a voltage controlled oscillator 18 having a 1f_{H} rate output signal. Voltage controlled oscillator is denoted 1f_{H} VCO. A 1f_{H} video signal is an input on line 11 to sync separator 14. The 1f_{H} video signal may be a standard NTSC interlaced video signal. The sync separator 14 provides horizontal synchronizing pulses on line 13 as one input to phase comparator 16 and vertical synchronizing pulses on another output line, not shown. The output of phase comparator 16 on line 15 is an input to low pass filter 20, denoted LPF. The error control signal generated by phase comparator 16 on line 15 is integrated by low pass filter 20 to develop an error control signal for voltage controlled oscillator 18. The output of voltage controlled oscillator 18 on line 17 is a 1f_{H} frequency timing signal. The 1f_{H} timing signal on line 17 is an input to 1f_{H}-to-2f_{H} converter 22. The 1f_{H} timing signal on line 17 is fed back on line 19 as the second input to phase comparator 16. Phase comparator 16, voltage controlled oscillator 18 and line 19 form a first phase locked loop, generating a 1f_{H} rate output signal. The 1f_{H} timing signal on line 17 is phase locked to the synchronizing signals of the 1f_{H} video input on line 11.

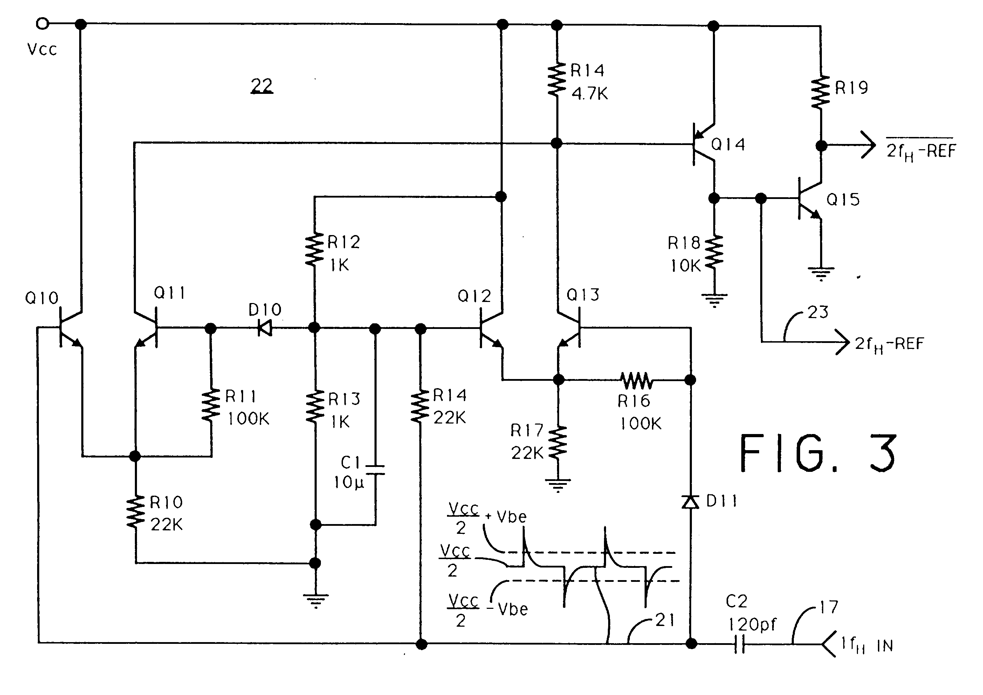

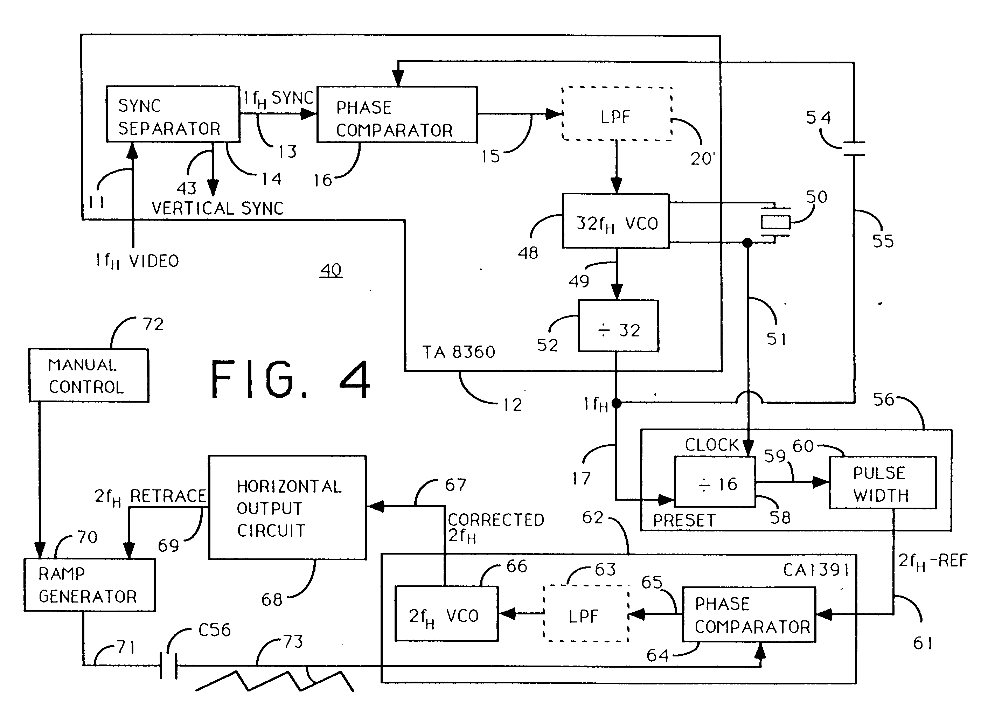

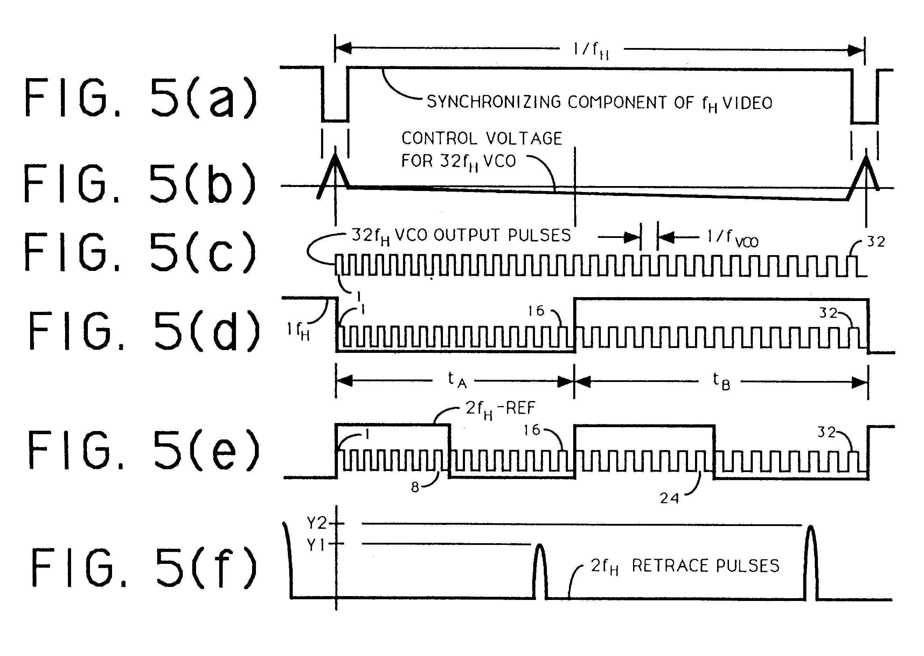

A 1f_{H}-to-2f_{H} converter 22 generates a 2f_{H} rate timing signal on line 23 from the 1f_{H} timing signal on line 17. The 2f_{H} timing signal on line 23 is an uncorrected timing signal, denoted 2f_{H}-REF. The operation of the 1fH to 2f_{H} converter 22 is explained in more detail in connection with FIGURE 3.

The 2f_{H} timing signal on line 23 will be symmetrical only in so far as the 1f_{H} timing signal on line 17 has a perfect, or nearly perfect, fifty percent duty cycle, and tight tolerance parts are used in the 1f_{H} to 2f_{H} converter 22. As a practical matter, the duty cycle of the 1f_{H} signal may exhibit unacceptable deviation from a fifty percent duty cycle due to 1f_{H} jitter.

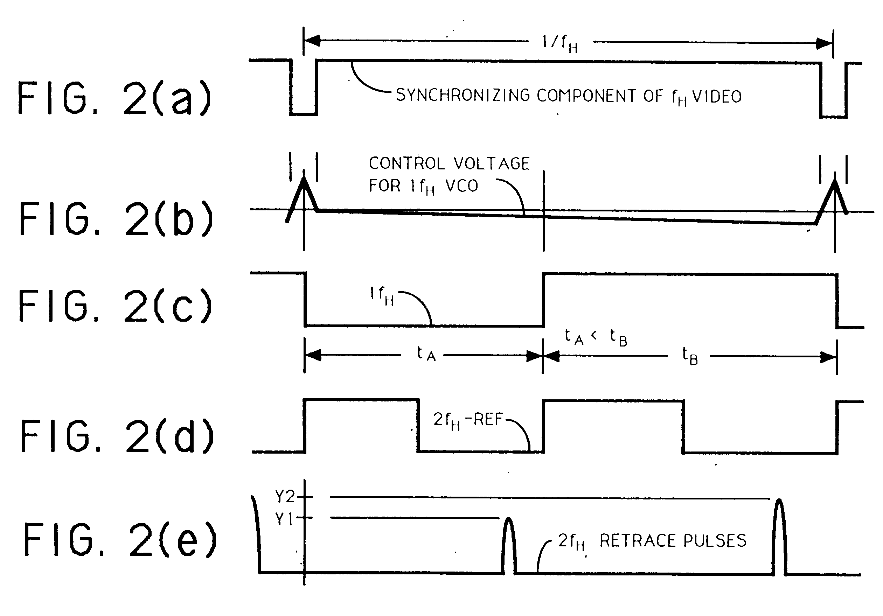

The term 1f_{H} jitter is used herein to refer to a 1f_{H} cyclical variation of the output of the low pass filter 20, which is the error correction signal for the voltage controlled oscillator 18. The 1f_{H} jitter causes a cyclical variation of the output of voltage controlled oscillator 18, at the 1f_{H} rate. The 1f_{H} synchronizing pulses shown in FIGURE 2(a) are separated from the 1f_{H} video signal by sync separator 14. The error signal, or control voltage, shown in FIGURE 2(b) is typical of how the the 1f_{H} jitter can occur. The jitter may result from feeding back the 1f_{H} timing signal to the phase comparator. The error control signal gradually decreases over most of the 1/f_{H} period, which causes the frequency of the 1f_{H} VCO to gradually decrease during each 1/f_{H} period. The 1f_{H} signal produced by voltage controlled oscillator 18 shown in FIGURE 2(c) is phase locked to the synchronizing pulses. The frequency of the voltage controlled oscillator varies to track the 1f_{H} synchronizing pulses. The 2f_{H} timing signal, which is derived from the 1f_{H} signal, has two pulses for each period of the 1f_{H} signal as shown in FIGURE 2(d). The first 2f_{H} pulse shown has a period t_{A} and the next successive 2f_{H} pulse has a period t_{B}. Due to the typical variation in the control signal for the 1f_{H} VCO, the periods t_{A} and t_{B} may not be equal. As shown in FIGURE 2(c), for example, t_{A} is shorter than t_{B}. Therefore, the retrace pulses which would result from the uncorrected 2f_{H}-REF signal have greater amplitudes during the alternate periods t_{B} than during the alternate periods t_{A,} as shown in FIGURE 2(e). An alternating succession of retrace pulses having different amplitudes Y1 and Y2 results in the two sets of alternating trace lines having different starting points, as illustrated in FIGURE 8. The uncorrected timing signal 2f_{H}-REF on line 23 may exhibit unacceptable asymmetry, which might result in a split raster.

A second phase locked loop is formed by a television horizontal processor circuit 24, which may be embodied as an industry type CA1391. Functions in the CA1391 include a phase comparator, an oscillator, a Vcc voltage regulator and a predriver.

The 2f_{H}-REF timing signal on line 23, which as noted may be adversely affected by jitter in the 1f_{H} timing signal on line 17, is an input to the phase comparator 26 of processor circuit 24. The output of phase comparator 26 on line 25 is an input to a low pass filter 30. Voltage controlled oscillator 28 generates a 2f_{H} rate output signal. The error control signal generated by phase comparator 26 is integrated by low pass filter 30. The output of voltage controlled oscillator 28 on line 27 provides a CORRECTED 2f_{H} signal for horizontal output circuit 32. The horizontal output circuit 32 generates a horizontal scanning current, and provides 2f_{H} RETRACE pulses on line 33. The retrace pulses are an input to a delay circuit 34, for adjusting the phase of the CORRECTED 2f_{H} signal relative to the uncorrected 2f_{H}-REF timing signal. The uncorrected 2f_{H}-REF timing signal has a fixed phase relationship with the 1f_{H} timing signal, through the 1f_{H} to 2f_{H} converter 22. The output of the delay circuit 34 on line 35 is a second input to phase comparator 26.

The operation of the second phase locked loop is such as to average period and frequency variations of the pulses in the 2f_{H}-REF timing signal, caused by jitter of the 1f_{H} timing signal. More particularly, the time constants of the low pass filters of the respective phase locked loops are set to provide the 1f_{H} phase locked loop with a slower loop response than that of the 2f_{H} phase locked loop. The 1f_{H} loop is relatively slow, that is, having a narrow bandwidth to optimize rejection of phase jitter with decreased RF signal strength, which may be evident in fringe reception areas. The 2f_{H} loop is typically faster, that is, having a wider bandwidth in order to optimize tracking of variations in the raster scanning current due to horizontal output transistor storage time variations and high voltage transformer tuning effects. The result is a straight nonbending raster under all beam current loading conditions. An exception to this mode of operation is in regard to the compromises necessary in the 1f_{H} loop to accommodate signals from video cassette recorders and the like, in which step changes of up to 10 microseconds are sometimes encountered. Tradeoffs can be made to weak signal performance without significant overall degradation of receiver performance.

If the asymmetry of the 2f_{H} pulses within a given 1f_{H} period is such that the first of the two pulses in the given 1f_{H} period has a frequency that is too high, the next pulse will have a frequency which is too low, and vice versa. Referring to FIGURE 2(c), t_{A} + t_{B} is constant, equalling the 1f_{H} period. The variations of the 2f_{H}-REF signal will always result in successive error signals of an opposite sense for each 1f_{H} period. This will be true except in those instances when there happens to be no asymmetry error and no error voltage in a given 1f_{H} period. The low pass filter of the 2f_{H} loop will not let the 2f_{H} voltage controlled oscillator change frequency as fast as changes occur in the error control signal resulting from variations in the uncorrected 2f_{H}-REF timing signal, which occur at a 1f_{H} rate. By the time the 2f_{H} voltage controlled oscillator decreases frequency a little, for example in response to an increase in the frequency of the 2f_{H}-REF timing signal during a period t_{A,} the error signal changes sense to increase the frequency in response to the subsequent decrease in the frequency of the 2f_{H}-REF signal during the subsequent period t_{B} of the same 1f_{H} period. This has the effect of driving the error control signal closer to an average value, which results in a smooth 2f_{H} DRIVE signal. Accordingly, the CORRECTED 2f_{H} synchronizing signals on line 27 are sufficiently symmetrical within the period of the 1f_{H} timing signal to prevent raster splitting. Stated more broadly, the second phase locked loop is not only effective to lock the CORRECTED 2f_{H} signal to the 1f_{H} synchronizing signal, the second phase locked loop is effective to average out the timing errors in the uncorrected 2f_{H}-REF signal due to 1f_{H} jitter. The timing errors cannot be corrected by employing a phase control loop which does not include an oscillator.

FIGURE 3 illustrates a suitable 1f_{H} to 2f_{H} converter circuit 22, which may be utilized in the circuit shown in FIGURE 1. The circuit 22 generates a 2f_{H} timing signal on line 23 responsive to a 1f_{H} timing signal on line 17. Positive pulses of the 2f_{H}-REF output signal on line 23 are generated when transistor Q14 conducts. An inverted output signal is available at the collector of transistor Q15. Conduction of transistor Q14 is controlled by two pairs of transistor switches, Q10 and Q11 on the one hand, and Q12 and Q13 on the other hand.

The 1f_{H} timing signal is capacitively coupled to converter circuit 22 through capacitor C2. The effect of capacitor C2 is to convert each rising edge of the 1f_{H} timing signal to a positive pulse, and each trailing edge thereof to a negative pulse, as shown by the waveform on line 21. In the absence of such pulses, the voltage level at the base of transistor Q12 will be Vcc/2, by the action of the voltage divider formed by resistors R12 and R13. Vcc may be +16 volts, for example. The quiescent voltage at the emitters of transistors Q12 and Q13 will be Vcc/2 - Vbe, by reason of the emitter follower configuration of transistor Q12. The anode of diode D11 will also be at Vcc/2, and the cathode of diode D11 will therefore be at Vcc/2-Vbe, which voltage appears at the base of transistor Q13. Accordingly, in this quiescent state, transistor Q12 is turned on and transistor Q13 is turned off. The base of transistor Q11 will be at Vcc/2 - Vbe due to the voltage drop across diode D10. The base of transistor Q10, which is also line 21, will be at Vcc/2. The emitters of transistors Q10 and Q11 will be at Vcc/2 - Vbe. Accordingly, in the same quiescent state, transistor Q10 will be turned on and transistor Q11 will be turned off. Whenever a positive voltage spike raises the voltage level at the anode of diode D11 to Vcc/2 + Vbe, the voltage at the base of transistor Q13 will be raised to Vcc/2, and of sufficient magnitude to turn on transistor Q13. At the same time, transistor Q12 will be turned off. When transistor Q13 turns on, the base of transistor Q14 will be pulled to ground, and transistor Q14 will turn on. When transistor Q14 turns on, a positive 2f_{H} rate pulse will be initiated at the collector of transistor Q14. When the positive voltage spike on line 17 terminates, the additional voltage across capacitor C2 will be dissipated at a time constant determined by the values of resistor R14 and capacitor C2. When capacitor C2 is sufficiently discharged transistor Q13 will turn off and transistor Q12 will turn on. When transistor Q13 turns off, transistor Q14 turns off, and the 2f_{H} pulse is terminated. When a negative voltage spike lowers the voltage on line 21 to Vcc/2 Vbe, transistor Q11 will be turned on and transistor Q10 will be turned off. When transistor Q11 turns on, transistor Q10 will be turned off. When transistor Q11 turns on, transistor Q14 turns on, and produces another positive 2f_{H} pulse. When the negative voltage spike terminates, and the charge on capacitor C2 discharges, transistor Q11 will turn off and transistor Q10 will turn on. When transistor Q11 turns off, transistor Q14 turns off, and terminates the positive pulse. Although the width of the 2f_{H}-REF pulses on line 23 will be subject to some variation, this variation is of no consequence, as the phase comparator 26, of a 1391 type integrated circuit, is edge sensitive. It is only necessary that the pulse width of the 2f_{H}-REF pulses be wider than approximately one-half of the retrace derived pulse, which is the other input to the phase comparator. This minimum width can be assured by the proper selection of capacitor C2 and resistor R14. At the same time, the pulse width should be maintained as narrow as is necessary in order to maintain a fast switching response in the converter circuit.

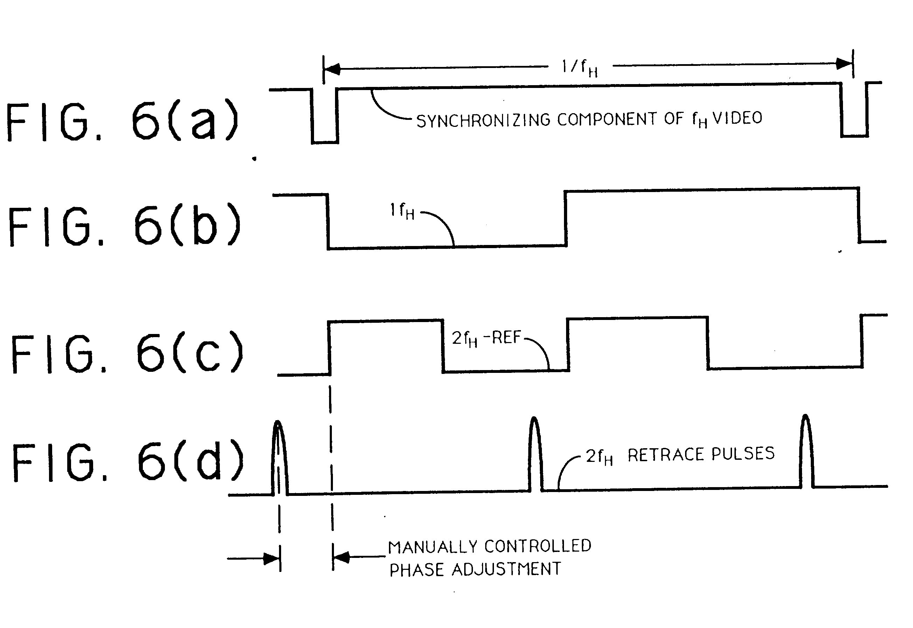

A synchronization system for a total 2f_{H} deflection synchronization system is shown in block diagram form in FIGURE 4, and generally designated by reference numeral 40. The 1-chip (analog circuit) 12 shown in FIGURE 1 is embodied as an industry type TA8360 1-chip. A 1f_{H} video signal on line 11 is an input to sync separator 14. The sync separator 14 provides vertical synchronizing pulses on line 43 and 1f_{H} horizontal synchronizing pulses on line 13. The 1f_{H} synchronizing signals on line 13, shown in FIGURE 5(a), are an input to phase comparator 16. The output of phase comparator 16 on line 15, shown in FIGURE 5(b), is an error control signal input to low pass filter 20'. The frequency characteristic of the low pass filter in the TA8360, for example, is determined primarily by external timing components. Accordingly, block 20' is shown by dashed lines. The external elements may be a series R-C network, having a 10 microfarad capacitor and a 3K resistor coupled between the capacitor and ground. Voltage controlled oscillator 48 operates at a 32f_{H} rate, responsive to a ceramic resonant circuit 50. A nominal 32f_{H} timing signal on line 49, shown in FIGURE 5(c), is an input to a divide by 32 circuit 52. The output of the divide by 32 circuit on line 17 is a 1f_{H} drive signal, shown in FIGURE 5(d). The 1f_{H} signal is an input on line 55 to the other input of phase comparator 16, which can result in the error control voltage of FIGURE 6(b) being adversely modified by a 1f_{H} ripple as shown. In the event the width of the 1f_{H} pulses, being fed back to the phase comparator 16, are too wide, the pulse width can be reduced, for example by series coupled capacitor 54. The 32f_{H} output of the resonant circuit 50 is also available externally of the 1-chip, on line 51.

A progressive scanning control circuit 56 also provides a number of control functions. The 32f_{H} output of resonant circuit 50 on line 51 and the 1f_{H} output on line 17 are inputs to a divide by 16 circuit 58. The 32f_{H} signal provides a CLOCK input for circuit 58. The output of the divide by 16 circuit is a timing signal at a frequency of 2f_{H}, twice the 1f_{H} rate of the output of the divide by 32 circuit. The 1f_{H} timing signal on line 17 provides a PRESET synchronizing signal for initializing the counter of divide by 16 circuit 58 and synchronizing the circuit 58 with the 1f_{H} signal on line 17. The output of the divide by 16 circuit 58 on line 59 is an input to pulse width circuit 60. Pulse width circuit 60 assures that the width of the pulses in the uncorrected 2f_{H}-REF signal on line 61 will be wide enough to ensure proper operation of phase comparator 64 in the CA1391 type integrated phase locked loop circuit 62.

As is the case with the circuit shown in FIGURE 1, the 2f_{H}-REF signal is symmetrical only to the extent that the initial duty cycle of the 1f_{H} signal is fifty percent. The effect of the 1f_{H} ripple on the error control voltage for the 32f_{H} VCO is reflected in the waveform of FIGURE 5(b). The error control voltage periodically falls during each 1f_{H} period. Accordingly, the output frequency f_{VCO} of the 32f_{H} VCO falls periodically, during each 1f_{H} period. As the frequency falls, each subsequent output pulse from the 32f_{H} VCO has a lower frequency. As the frequency decreases, the pulse width 1/f_{VCO} increases. The divider circuit 58 doubles the frequency of the 1f_{H} signal, which has a period of 32 output pulses of the 32f_{H} VCO, by dividing the period in half, that is, into two sixteen pulse periods. However, due to the falling 1f_{H} VCO frequency and due to the periodically increasing pulse widths, the aggregate width of the first sixteen pulses, t_{A} is less than the aggregate width of the next sixteen pulses, t_{B}. When the duration of t_{A} is not equal to the duration of t_{B}, the 2f_{H}-REF timing signal is not symmetric within the period of the 1f_{H} signal, notwithstanding the precision of the digital divider. This asymmetry can cause retrace pulses of alternating amplitudes Y1 and Y2 as shown in FIGURE 5(f), which are analogous to the retrace pulses shown in FIGURE 2(e), and which can result in the raster splitting. The 2f_{H}-REF signal generated by the digital circuit must therefore also be treated as an uncorrected signal, which requires further processing.

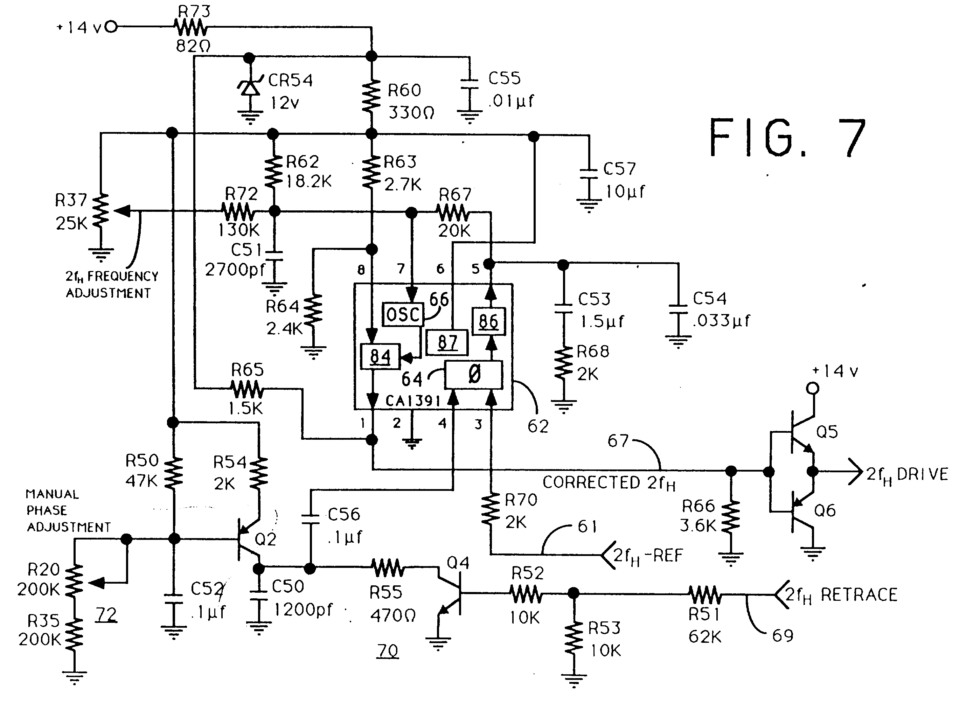

The error control signal of phase comparator 64 on line 65 is an input to low pass filter 63. The output of low pass filter 63 is a control input to voltage controlled oscillator 66, which operates at a 2f_{H} rate, and is denoted 2f_{H} VCO. The operating frequency of a type 1391 oscillator and the frequency response of the low pass filter are determined by external timing components, as shown in more detail in FIGURE 7. Accordingly, block 63 is shown by dashed lines. The frequency characteristic of the low pass filter 63 is determined by the series R-C network formed, for example, by 1.5 microfarad capacitor C53 and 2K resistor R68. The output of voltage controlled oscillator 66 on line 67 provides CORRECTED 2f_{H} synchronizing signals for a horizontal output circuit 68. The output of the horizontal output circuit 68 on line 69 provides a 2f_{H} signal in the form of 2f_{H} RETRACE pulses. The 2f_{H} RETRACE pulses are an input to ramp generator 70, which is subject to a manual phase delay by manual delay circuit 72. The output of ramp generator 70 on line 71 is AC coupled by capacitor C56 to the other input of phase comparator 64 by line 73.

The waveforms of FIGURE 6(a) - 6(d) illustrate the relative phase positions of the 1f_{H} and 2f_{H}-REF timing signals generated in the circuit of FIGURE 4. FIGURE 6(a) illustrates the 1f_{H} SYNC pulses separated by sync separator 14 and provided to phase comparator 16 on line 13. FIGURE 6(b) shows the 1f_{H} output of the divide by 32 circuit 52 on line 53. The first phase locked loop is therefore responsible for maintaining the relative phase of the leading edge of the 1f_{H} pulses and the midpoint, for example, of the 1f_{H} SYNC pulses. This alignment can be adjusted by means of a delay or filter circuit, shown as capacitor 54. As illustrated in FIGURES 6(a) and 6(b), the delay circuit 54 is not inserting any delay. FIGURE 6(c) illustrates the 2f_{H}-REF signal generated by pulse width circuit 60 on line 61, which is one of the inputs to phase comparator 64 of the second phase locked loop 62. As is the case with the circuit of FIGURE 1, the second phase locked loop 62 of FIGURE 4 is effective to lock the CORRECTED 2f_{H} signal to the 1f_{H} synchronizing signal and is effective to average out the asymmetric timing errors in the uncorrected 2f_{H}-REF signal due to 1f_{H} jitter. FIGURE 6(d) shows the 2f_{H} RETRACE pulses on line 69, which are an input to a ramp generator 70. A manual control circuit 72 for the ramp generator 70 enables adjustment of the difference in phase between the CORRECTED 2f_{H} pulses and the 2f_{H}-REF pulses.

A circuit schematic for a portion of the block diagram shown in FIGURE 4 is shown in FIGURE 7. Phase locked loop circuit 62 is embodied as an industry type CA1391 integrated circuit. The circuit 62 contains an oscillator 66, phase detector 64, predriver 84, phase detector output driver 86 and Vcc voltage regulator 87. The oscillator 66 is an RC type with terminal 7 used to control frequency. An external capacitor C51 is connected from terminal 7 to ground and charges through external resistance R62 coupled between terminals 6 and 7. When the voltage at terminal 7 exceeds an internal potential bias, capacitor C51 is discharged through an internal resistor. This conduction causes generation of a drive pulse, which terminates when the capacitor is sufficiently discharged. The discharge cycle is responsive to a sawtooth signal at terminal 4. Negative-going synchronizing pulses at terminal 3 are phase compared with the sawtooth waveform at terminal 4, which is derived from horizontal flyback or retrace pulses. If there is no phase difference between the synchronizing signal and the sawtooth waveform, there is no net output current at terminal 5. When a phase offset occurs, current flows either in or out of terminal 5 to correct the frequency. The duty cycle, or mark space ratio, of the predriver 84 may be adjusted by setting the potential at terminal 8. In the circuit of FIGURE 7, this is determined by the voltage divider formed by resistors R63 and R64. Potentiometer R37, coupled to terminal 7 through resistor R72, may be used to manually adjust the frequency of oscillator 66.

The ramp generating circuit 70 comprises transistor Q4, resistor R55 and capacitor C50. The ramp signal generated across capacitor C50 is AC coupled to terminal 4 through capacitor C56. A transistor Q2 and potentiometer R20 form a manually operable delay circuit 72, which varies the current needed to charge the ramp capacitor C50. Variation of the time needed to charge capacitor C50 provides a variable delay of approximately from 0-2 microseconds in the relative phase of the 2f_{H}-REF pulses and the CORRECTED 2f_{H} pulses.

The CORRECTED 2f_{H} output of predriver 84 on line 67 is an input to a push-pull driver circuit comprising transistors Q5 and Q6, which provides a 2f_{H} DRIVE output signal to the horizontal output circuit.

## Claims

1. A horizontal deflection system, comprising:
a first phase locked loop (12) generating a first timing signal (on 17) at a first horizontal synchronizing frequency,
means (56) for deriving from said first timing signal a second timing signal (on 61), having a second frequency at an integral multiple, greater than unity, of said first frequency and being subject to a variation in frequency at a rate corresponding to said first frequency;
a second phase locked loop (62) for receiving said second timing signal (on 61) and a signal (on 73) produced by said second phase locked loop (62) at said second frequency, including a voltage controlled oscillator (66) for generating a smooth horizontal synchronizing signal (on 67) at said second frequency, said second phase locked loop (62) having a characteristic loop response time greater than the period of said rate of variation of said second timing signal; and
a horizontal output deflection stage (68) coupled to said second phase locked loop (62) for forming a synchronized horizontal scanning in accordance with said second frequency.

2. The system of claim 1, characterized in that a feedback signal (on 55) for said first phase locked loop (12) is derived from said first timing signal (on 17).

3. The system of claim 1, characterized in that said second phase locked loop (62) comprises a low pass filter (63) for controlling said voltage controlled oscillator (66), said low pass filter having a frequency characteristic defining said loop response.

4. The system of claim 1, characterized in that said feedback signal (on 73) is derived from retrace pulses (on 69) from said horizontal output deflection stage (68).

5. The system of claim 4, characterized by a sawtooth signal circuit (70) for generating said feedback signal (on 73) responsive to said retrace pulses (on 69).

6. The system of claim 1, characterized in that a sum of successive pulse periods of said second timing signal (on 61) in each pulse period of said first timing signal (on 17) is constant.

## Patentansprüche

1. Horizontal-Ablenksystem umfassend:
eine erste Phasenregelschleife (12), die ein erstes Zeitsteuersignal (in 17) mit einer ersten Horizontal-Synchronfrequenz erzeugt;
Mittel (56) zur Ableitung eines zweiten Zeitsteuersignals (in 61), das eine zweite Frequenz hat, die um ein ganzzahliges Vielfaches größer als 1 der ersten Frequenz ist und einer Frequenzänderung mit einer Rate unterworfen ist, die der ersten Frequenz entspricht;
eine zweite Phasenregelschleife (62) zum Empfang des zweiten Taktsignals (in 61) und eines Signals (in 73), das von der zweiten Phasenregelschleife (62) mit der zweiten Frequenz erzeugt wird, die einen spannungsgesteuerten Oszillator (66) zur Erzeugung eines glatten Horizontal-Synchronsignals (in 67) mit der zweiten Frequenz enthält, wobei die zweite Phasenregelschleife (62) eine charakteristische Schleifen-Ansprechzeit hat, die größer als die Periode der Änderungsrate des zweiten Zeitsteuersignals ist; und
eine Horizontal-Ausgangs-Ablenkstufe (68), die mit der zweiten Phasenregelschleife (62) verbunden ist, um eine synchronisierte Horizontal-Abtastung gemäß der zweiten Frequenz zu bilden.

2. System nach Anspruch 1, dadurch gekennzeichnet, daß ein Rückkopplungssignal (in 55) für die erste Phasenregelschleife (12) von dem ersten Taktsignal (in 17) abgeleitet wird.

3. System nach Anspruch 1, dadurch gekennzeichnet, daß die zweite Phasenregelschleife (62) ein Tiefpaßfilter (63) umfaßt, um den spannungsgesteuerten Oszillator (66) zu steuern, wobei das Tiefpaßfilter eine Frequenzcharakteristik hat, die das Schleifen-Ansprechen definiert.

4. System nach Anspruch 1, dadurch gekennzeichnet, daß das Rückkopplungssignal (in 73) von Rücklaufimpulsen (in 69) von der Horizontal-Ausgangs-Ablenkstufe (68) abgeleitet wird.

5. System nach Anspruch 4, gekennzeichnet durch eine Sägezahn-Signalschaltung (70) zur Erzeugung des Rückkopplungssignals (in 73) in Abhängigkeit von den Rücklaufimpulsen (in 69).

6. System nach Anspruch 1, dadurch gekennzeichnet, daß eine Summe von aufeinanderfolgenden Impulsperioden des zweiten Taktsignals (in 61) in jeder Impulsperiode des ersten Taktsignals (in 17) konstant ist.

## Revendications

1. Système de déviation horizontale, comprenant:
une première boucle asservie en phase (12) générant un premier signal de synchronisation (sur 17) à une première fréquence de synchronisation horizontale,
un moyen (56) pour dériver dudit premier signal de synchronisation un deuxième signal de synchronisation (sur 61), ayant une deuxième fréquence à un nombre entier multiple, supérieur à l'unité, de ladite première fréquence et étant soumis à une variation de fréquence à une cadence correspondant à ladite première fréquence;
une deuxième boucle asservie en phase (62) pour recevoir ledit deuxième signal de synchronisation (sur 61) et un signal (sur 73) produit par ladite deuxième boucle asservie en phase (62) à ladite deuxième fréquence, comportant un oscillateur commandé en tension (66) pour générer un signal de synchronisation horizontale lissé (sur 67) à ladite deuxième fréquence, ladite deuxième boucle asservie en phase (62) ayant une réponse de boucle caractéristique supérieure en temps à la période de ladite cadence de variation dudit deuxième signal de synchronisation; et
un étage de déviation de sortie horizontale (68) couplé à ladite deuxième boucle asservie en phase (62) pour former un balayage horizontal synchronisé conformément à ladite deuxième fréquence.

2. Système de la revendication 1, caractérisé en ce qu'un signal de contre-réaction (sur 55) de ladite première boucle asservie en phase (12) est dérivé dudit premier signal de synchronisation (sur 17).

3. Système de la revendication 1, caractérisé en ce que ladite deuxième boucle asservie en phase (62) comprend un filtre passe-bas (63) pour commander ledit oscillateur commandé en tension (66), ledit filtre passe-bas ayant une caractéristique de fréquence définissant la réponse de ladite boucle.

4. Système de la revendication 1, caractérisé en ce que ledit signal de contre-réaction (sur 73) est dérivé des impulsions de retour de balayage (sur 69) provenant dudit étage de déviation de sortie horizontale (68)

5. Système de la revendication 4, caractérisé par un circuit de signaux en dent de scie (70) pour générer ledit signal de contre-réaction (sur 73) en réponse auxdites impulsions de retour de balayage (sur 69).

6. Système de la revendication 1, caractérisé en ce qu'une somme des périodes d'impulsions successives dudit deuxième signal de synchronisation (sur 61) dans chaque période d'impulsions dudit premier signal de synchronisation (sur 17) est constante.
